# EUROPÄISCHE PATENTSCHRIFT

(11) **EP 3 084 862 B1**
(45) Veröffentlichungstag und Bekanntmachung des Hinweises auf die Patenterteilung: **13.06.2018**
(21) Anmeldenummer: 14802919.2
(22) Anmeldetag: 27.11.2014
(51) Int. Cl.: H01M 4/133, H01M 4/587, H01M 10/54, H01M 4/134, H01M 4/38, H01M 4/62, H01M 10/0568, H01M 4/36

(54) **MAGNESIUMBATTERIE**
MAGNESIUM BATTERY
BATTERIE AU MAGNÉSIUM

(30) Priorität: 20.12.2013 DE 102013227049
(43) Veröffentlichungstag der Anmeldung: 26.10.2016
(73) Patentinhaber: VARTA Micro Innovation GmbH, 8010 Graz (AT)
(72) Erfinder: KOLLER, Stefan, 8010 Graz (AT); GOD, Colin, 8010 Graz (AT)
(74) Vertreter: Patentanwaltskanzlei Cartagena
(86) Internationale Anmeldenummer: PCT/EP2014/075824
(87) Internationale Veröffentlichungsnummer: WO 2015/090897

(56) Entgegenhaltungen:
- JP-A- 2012 252 812
- JP-B1- 4 973 819
- US-A1- 2013 302 697

## Beschreibung

Die Erfindung betrifft eine wieder aufladbare Magnesiumbatterie und eine negative Elektrode für eine wieder aufladbare Magnesiumbatterie.

Der Begriff "Batterie" meinte ursprünglich mehrere in Serie geschaltete elektrochemische Zellen in einem Gehäuse. Heute werden auch einzelne elektrochemische Zellen häufig als Batterie bezeichnet. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotenzial stattfindende Teilreaktion läuft an der negativen Elektrode ab, eine bei vergleichsweise höherem Redoxpotenzial an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären oder wiederaufladbaren Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Unter den sekundären Zellen und Batterien werden vergleichsweise hohe Energiedichten von Zellen und Batterien auf Basis von Lithiumionen erreicht. Bei Batterien auf Basis von Lithiumionen ist allerdings problematisch, dass sie aufgrund der hohen Reaktivität von Lithium und damit gegebenenfalls einhergehenden Nebenreaktionen mit dem Elektrolyten ein gewisses Sicherheitsrisiko darstellen können. Weiterhin ist Lithium ein relativ teures Element. Insbesondere vor dem Hintergrund einer zunehmenden Elektromobilisierung und der damit verbundenen Nachfrage nach großen und leistungsstarken Lithiumbatterien, rücken diese Sicherheits- und Kostenfaktoren stärker in den Vordergrund.

Daher wurde in letzter Zeit zunehmend versucht, eine Alternative zum Lithium zu finden. Eine mögliche Alternative ist der Einsatz von Magnesium. Magnesium ist weniger reaktiv und scheidet sich zudem elektrochemisch im Gegensatz zu Lithium nicht dendritisch ab. Ein interner Kurzschluss einer Batterie aufgrund von Dendriten ist daher weitestgehend ausgeschlossen. Im Übrigen ist Magnesium Im Vergleich zu Lithium in einem um etwa den Faktor 100 größeren Anteil in der Erdkruste vorhanden, was sich in einem niedrigeren Preis äußert. Ferner lassen sich mit Magnesiumionen theoretisch höhere Energiedichten erzielen, da durch das zweiwertige Magnesiumion die doppelte Ladung pro Ion übertragen werden kann. Eine Herausforderung bei der Entwicklung von Magnesiumbatterien ist allerdings das chemische Verhalten der zwischen den Batterieelektroden hin- und herwandernden Magnesiumionen. Die Wanderung der Magnesiumionen ist, anders als für Lithiumionen, bei Lade- und Entladezyklen schlechter umkehrbar, was die Lebensdauer von Magnesiumbatterien begrenzen kann.

Bekannt sind wieder aufladbare Magnesiumbatterien, bei denen Magnesiumionen aus einer metallischen Magnesiumanode über einen Elektrolyten in ein Kathodenmaterial, beispielsweise Vanadiumoxid (V₂O₅), eingelagert werden (Entladereaktion). Beim Aufladen werden die Magnesiumionen aus der Kathode ausgelagert und an der Anode in Form von metallischem Magnesium wieder abgeschieden. Der Elektrolyt muss dabei zum einen die reversible elektrochemische Abscheidung und Auflösung des Magnesiums an der Anode gewährleisten, zum anderen muss er so oxidationsstabil sein, dass er die reversible Ein- und Auslagerung der Magnesiumionen in das Kathodenmaterial bei typischen Potenzialen von etwa 2 bis 3 Volt (bezogen auf eine Magnesiumelektrode) ermöglicht. Insbesondere die reversible elektrochemische Abscheidung und Auflösung von Magnesium an der Anode ist mit organischen Elektrolyten, wie sie beispielsweise in herkömmlichen Lithiumbatterien verwendet werden, nicht möglich, da diese aufgrund ihrer Reaktivität eine Passivierung der metallischen Magnesiumanode bewirken würden.

Aus der JP 4973819 B1 sind Magnesiumbatterien bekannt, deren negative Elektroden ein kohlenstoffbasiertes Aktivmaterial aufweisen. Als Elektrolytsysteme sind Grignardreagenzien in Ether, Magnesiumsalze in N-Methyl-Pyrrolidon (NMP) und in Wasser, organische Carbonate wie Propylencarbonat (kombiniert mit einem Imid-Leitsalz) sowie Dimethoxyethan (ebenfalls kombiniert mit einem Imid-Leitsalz) beschrieben.

Aus der JP 2012-252812 A sind Batterien bekannt, die anodenseitig ein kohlenstoffbasiertes Aktivmaterial aufweisen, das Magnesiumionen interkalieren kann. Beschrieben sind zahlreiche Magnesiumsalze und Lösungsmittel, die zusammen ein Elektrolytsystem für die Batterie bilden können. Als Lösungsmittel findet dabei unter anderem Dimethylacetamid Erwähnung. Als Leitsalz ist insbesondere Magnesium-Trifluoromethansulfonat genannt.

In der US 2013/302697 A1 ist ebenfalls eine Magnesiumbatterie beschrieben, die ein kohlenstoffbasiertes Aktivmaterial auf Seiten der negativen Elektrode aufweisen kann. Als geeignete Elektrolytsysteme werden insbesondere in Tetrahydrofuran gelöste Grignard-Reagenzien beschrieben.

Es besteht generell ein Bedarf an alternativen oder verbesserten elektrochemisch aktiven Materialen und Elektrolyten für die Herstellung von wieder aufladbaren Magnesiumbatterien.

### Aufgabe und Lösung

Der vorliegenden Erfindung lag daher die Aufgabe zugrunde, verbesserte Magnesiumbatterien bereitzustellen, welche die aus dem Stand der Technik bekannten Nachteile nicht aufweisen oder zumindest minimieren.

Diese Aufgabe wird gelöst durch die Magnesiumbatterie mit den Merkmalen des Anspruchs 1. Bevorzugte Ausführungsformen der erfindungsgemäßen Magnesiumbatterie sind in den abhängigen Ansprüchen 2 bis 6 angegeben.

Die erfindungsgemäße Magnesiumbatterie umfasst mindestens eine positive Elektrode, die ein Aktivmaterial enthält, welches Magnesiumionen reversibel ein- und auszulagern vermag, mindestens eine negative Elektrode, die ein Aktivmaterial enthält, das Magnesiumionen reversibel ein- und auszulagern vermag, sowie einen Elektrolyten, der ein Magnesiumsalz enthält und über welchen ein Ladungsaustausch, insbesondere ein Hin- und Herwandern der Magnesiumionen, zwischen der mindestens einen positiven und der mindestens einen negativen Elektrode erfolgen kann.

Bei der erfindungsgemäßen Batterie handelt es sich um eine sekundäre Batterie, also um eine wieder aufladbare Batterie.

Die erfindungsgemäße Batterie zeichnet sich dadurch aus, dass das Aktivmaterial in der negativen Elektrode mindestens eine Kohlenstoffmodifikation und bevorzugt zusätzlich mindestens ein Metall umfasst, das mit Magnesium eine Legierung zu bilden vermag. Bevorzugt ist das mindestens eine Metall aus der Gruppe mit Silizium, Germanium, Zink, Antimon, Bismut, Aluminium und Mangan ausgewählt. Gegebenenfalls können die genannten Metalle in der negativen Elektrode mit Magnesium legiert sein.

Bevorzugt wird ein Aktivmaterial der allgemeinen Formel MgₓM_{y} eingesetzt, wobei M ein Mitglied der Gruppe mit Silizium, Germanium, Zink, Antimon, Bismut, Aluminium, Mangan oder Kohlenstoff mit 0 ≤ x ≤ 2 und 1 ≤ y ≤ 120 ist.

Überraschenderweise hat sich herausgestellt, dass derartige Aktivmaterialien, die bislang für Zellen und Batterien auf Basis von Lithiumionen eingesetzt wurden, auch zu einer reversiblen Ein- und Auslagerung von Magnesiumionen befähigt sind.

Bei der Kohlenstoffmodifikation, welche Magnesium in Form von Ionen reversibel ein- und auszulagern vermag, kann es sich grundsätzlich um einen Vertreter aus der Gruppe mit amorpher Kohlenstoff, graphitierter Kohlenstoff, Graphit, Graphen, Fullerene, Kohlenstoffnanoröhrchen und Mischungen davon handeln. In jedem Fall umfasst das Aktivmaterial als Kohlenstoffmodifikation Graphit. Als amorpher Kohlenstoff kann Hart- und/ oder Weichkohlenstoff, insbesondere mesoporöser Hart- und/oder Weichkohlenstoff, eingesetzt werden. Bei dem Graphit kann es sich insbesondere um synthetisches mesophasiges Graphit und/oder natürliches Graphit (Naturgraphit) handeln.

In der Regel enthält die mindestens eine negative Elektrode das zur Interkalation von Magnesiumionen befähigte Aktivmaterial in partikulärer, insbesondere sphärischer und/oder sphäroider, Form. Zur Interkalation von Magnesiumionen befähigte Metalle werden bevorzugt mit einer mittleren Partikelgröße im Bereich zwischen 1 nm und 10 µm, insbesondere 10 nm und 1 µm, eingesetzt. Die mindestens eine Kohlenstoffmodifikation wird bevorzugt mit einer mittleren Partikelgröße im Bereich zwischen 1 nm und 500 µm, insbesondere 10 nm und 200 µm, eingesetzt.

Es kann bevorzugt sein, dass die negative Elektrode an Stelle der mindestens einen Kohlenstoffmodifikation und des mindestens einen Metalls ein Komposit aus mindestens einem der genannten Metalle oder einer entsprechenden Magnesiumlegierung und der mindestens einen Kohlenstoffmodifikation umfasst. Bei dem Komposit aus der Kohlenstoffmodifikation und dem Metall handelt es sich bevorzugt um Mehrschichtpartikel, insbesondere Partikel mit einer Kern-Hülle-Struktur. Dabei ist es bevorzugt, dass der Kern aus der Kohlenstoffmodifikation, beispielsweise einem Graphitpartikel, und die Hülle aus einem Metall, beispielsweise Silizium, bestehen. Besonders bevorzugt eingesetzte Partikel mit einer Kern-Hülle-Struktur sind Graphit-Silizium-Partikel, Graphit-Germanium-Partikel, Graphit-Zinn-Partikel und Mischungen davon.

Insbesondere können auch Kompositpartikel eingesetzt werden, die einen Kern aus Graphit sowie eine diesen Kern umgebende Hülle aus amorphem Kohlenstoff mit darin eingelagerten nanoskaligen Metallpartikeln, insbesondere Silizium- und/ oder Germanium-Partikeln, aufweisen. Die Herstellung solcher Partikel ist in der EP 2 573 845 A1 beschrieben. Daneben kann es sich bei den Kompositpartikeln auch um Kohlenstoffpartikel handeln, die eine Hülle aus metallischem Silizium aufweisen. Eine solche Hülle kann beispielsweise durch thermische Zersetzung eines Silans in Gegenwart der Kohlenstoff-Partikel gebildet werden, wie das in der DE 10 2008 063 552 A1 beschrieben ist. Daneben können auch Partikel eingesetzt werden, die einen metallischen Kern, insbesondere Siliziumkern, aufweisen und eine Hülle aus einem Kohlenstoffmaterial. Derartige Partikel lassen sich beispielsweise durch Beschichtung der entsprechenden Metallpartikel mit einem kohlenstoffhaltigen Material und anschließender Pyrolyse des kohlenstoffhaltigen Materials herstellen.

Die mindestens eine negative Elektrode kann als Aktivmaterial nur die mindestens eine Kohlenstoffmodifikation enthalten. Bevorzugt enthält sie als Aktivmaterial aber insbesondere Mischungen aus der mindestens einen Kohlenstoffmodifikation und dem mindestens einen mit Magnesium legierbaren oder legierten Metall. In dieser bevorzugten Ausführungsform umfasst das zur reversiblen Ein- und Auslagerung von Magnesiumionen befähigte Aktivmaterial bevorzugt die folgenden Komponenten in den folgenden Anteilen:
- 5 bis 95 Gew.-% der mindestens einen Kohlenstoffmodifikation und
- 95 bis 5 Gew.-% des mindestens einen mit Magnesium legierbaren oder legierten Metalls.

Die Prozentangaben beziehen sich dabei auf trockenes Aktivmaterial und ergänzen sich zu 100 Gew.-%.

Die mindestens eine positive Elektrode der erfindungsgemäßen Magnesiumbatterie enthält als Aktivmaterial vorzugsweise mindestens eine Metallverbindung, insbesondere Metalloxidverbindung, welche Magnesium in Form von Ionen reversibel ein- oder auszulagern vermag.

Bevorzugt handelt es sich bei der mindestens einen Metallverbindung um eine Verbindung auf Basis von Aluminium, Nickel, Kobalt, Mangan, Chrom, Eisen, Strontium und Vanadium in Kombination mit zumindest einem Element aus der Gruppe mit Sauerstoff, Fluor, Schwefel und Phosphor. Besonders bevorzugt handelt es sich um ein Magnesium-Metalloxid und/oder um ein Magnesium-Metallphosphat. Insbesondere kann es sich um Vanadiumoxid (V₂O₅) handeln.

In einer besonders vorteilhaften Ausgestaltung handelt es sich bei der positiven Elektrode um eine Elektrode, die auch in herkömmlichen Lithiumbatterien eingesetzt werden kann.

Die Elektroden der erfindungsgemäßen Batterie umfassen neben den genannten Aktivmaterialien auch elektrochemisch inaktive Komponenten. Als elektrochemisch inaktive Komponenten sind insbesondere leitfähigkeitsverbessernde Additive, Elektrodenbinder und Stromableiter zu nennen. Über Stromableiter werden Elektronen den Elektroden zu- oder abgeführt. Elektrodenbinder sorgen für die mechanische Stabilität der Elektroden sowie für die Kontaktierung der Partikel aus Aktivmaterial untereinander und zum Stromableiter. Zu einer verbesserten elektrischen Anbindung der elektrochemisch aktiven Partikel an den Stromableiter können weiterhin auch die leitfähigkeitsverbessernden Additive beitragen. Die elektrochemisch inaktiven Komponenten sollten zumindest im Potenzialbereich der jeweiligen Elektrode elektrochemisch stabil sowie chemisch inert gegenüber gängigen Elektrolyten sein.

Die mindestens eine negative Elektrode umfasst als elektrochemisch inaktive Komponenten vorzugsweise mindestens einen Elektrodenbinder, ein leitfähigkeitsverbesserndes Additiv sowie gegebenenfalls noch weitere Additive wie beispielsweise Korrosionsinhibitoren. Ferner enthält sie in der Regel einen metallischen Stromableiter, beispielsweise in Form einer Kupferfolie oder Nickelfolie oder in Form eines Kupfernetzes oder eines Nickelnetzes.

Bevorzugt werden im Rahmen der vorliegenden Erfindung als Elektrodenbinder mit organischen Lösungsmitteln prozessierbare Binder, z.B. fluorhaltige Kunststoffe wie beispielsweise Polyvinylidenfluorid (PVDF) und/oder Polytetrafluorethylen (PTFE), eingesetzt. Bevorzugt werden aprotische organische Lösungsmittel wie beispielsweise N-Methyl-2-pyrrolidon verwendet. Problemlos können aber auch wässrig prozessierbare Elektrodenbinder, beispielsweise Elektrodenbinder auf Zellulosebasis wie Carboxymethylzellulose (CMC), eingesetzt werden. Ein geeignetes leitfähigkeitsverbesserndes Additiv ist beispielsweise Ruß.

Vorzugsweise liegt das Aktivmaterial der mindestens einen negativen Elektrode eingebettet in eine Matrix aus dem Elektrodenbinder vor.

In einer weiteren Ausführungsform enthält die negative Elektrode die folgenden Komponenten in den folgenden Anteilen:
- zwischen des Aktivmaterials 10 und 100 Gew.-%, vorzugsweise 20 und 98 Gew.-%, insbesondere 40 und 95 Gew.-%
- zwischen 0 und 50 Gew.-%, vorzugsweise 1 und 40 Gew.-%, insbesondere 2 und 20 Gew.-% des Elektrodenbinders
- zwischen 0 und 70 Gew.-%, vorzugsweise 1 und 60 Gew.-%, insbesondere 2 und 50 Gew.-% des leitfähigkeitsverbessernden Additivs

Die Prozentangaben beziehen sich hierbei auf die Gesamtmasse der negativen Elektrode ohne Berücksichtigung eines gegebenenfalls vorhandenen Stromableiters sowie ohne Berücksichtigung eines Elektrolyten (maßgeblich ist der trockene Zustand).

Eine negative Elektrode enthaltend 95 Gew.-% graphitischen Kohlenstoff als Aktivmaterial und 5 Gew.-% elektrochemisch inaktive Materialien (Elektrodenbinder und leitfähigkeitsverbesserndes Additiv) weist eine theoretische spezifische Kapazität von etwa 372 Ah/kg auf. Eine negative Elektrode enthaltend 95 Gew.-% amorphes nanoskaliges Silizium sowie 5 Gew.-% elektrochemisch inaktive Materialien (Elektrodenbinder und leitfähigkeitsverbesserndes Additiv) weist eine theoretische spezifische Kapazität von 3817 Ah/kg auf. Die theoretische spezifische Kapazität einer negativen Elektrode enthaltend als Aktivmaterial eine Mischung oder ein Komposit aus graphitischem Kohlenstoff und Silizium liegt in der Regel zwischen diesen beiden Werten.

Im Vergleich zu aus dem Stand der Technik bekannten Materialien, die zur Ein- und Auslagerung von Magnesiumionen befähigt sind, lassen sich mit dem Aktivmaterial der erfindungsgemäßen Magnesiumbatterie sehr viel höhere Speicherkapazitäten erzielen. Beispielsweise zeigen Elektroden, die Chevrel-Phasen (ein Material basierend auf Molybdän und Schwefel der allgemeinen Formel MgₓMo₆S₈ (0 < x < 2)) als Aktivmaterial für die reversible Ein- und Auslagerung von Magnesiumionen enthalten, eine Kapazität von nur 110 Ah/kg.

Die mindestens eine positive Elektrode umfasst als elektrochemisch inaktive Komponenten in der Regel ebenfalls mindestens einen Elektrodenbinder, ein leitfähigkeitsverbesserndes Additiv und einen Stromableiter sowie gegebenenfalls noch weitere Additive wie Korrosionsinhibitoren. Betreffend geeignete Elektrodenbinder, Additive und Stromableiter kann auf die obigen Ausführungen verwiesen werden. Positive und negative Elektroden der erfindungsgemäßen Batterie können beispielsweise das gleiche leitfähigkeitsverbessernde Additiv aufweisen.

Die beschriebenen Aktivmaterialien haben den Vorteil, dass sie (anders als metallisches Magnesium) in Kombination mit vielen klassischen Elektrolytsystemen mit hoher oxidativer Stabilität verwendet werden können. Dies erlaubt wiederum den Betrieb der erfindungsgemäßen Batterie bei höheren Spannungen als dies bei konventionellen Magnesiumbatterien möglich war.

Der Elektrolyt einer erfindungsgemäßen Batterie umfasst in jedem Fall ein organisches Lösungsmittel, in dem das Magnesiumsalz gelöst ist. Gegebenenfalls kann der Elektrolyt zusätzlich auch eine ionische Flüssigkeit, in der das Magnesiumsalz gelöst ist, umfassen

Bei ionischen Flüssigkeiten handelt es sich bekanntlich um organische Salze, deren Ionen durch Ladungsdelokalisierung und sterische Effekte die Bildung eines stabilen Kristallgitters behindern. Bereits geringe thermische Energie genügt daher, um die Gitterenergie zu überwinden und die feste Kristallstruktur aufzubrechen. Es handelt sich bei ionischen Flüssigkeiten somit um Salze, die bei Temperaturen unter 100 °C flüssig sind, ohne dass das Salz dabei in einem Lösungsmittel wie Wasser gelöst ist. Vorliegend können als ionische Flüssigkeiten insbesondere solche auf Basis von Pyridinium-, Imidazolium- und/oder Ammoniumionen zum Einsatz kommen.

Als Magnesiumsalz enthält der Elektrolyt mindestens ein Leitsalz aus der Gruppe mit Mg(N(CF₃SO₂)₂)₂, Mg(ClO₄)₂ und Mg(CF₃SO₃)₂. Gegebenenfalls kann der Elektrolyt noch weitere Leitsalze enthalten.

Die reversible Einlagerung von Magnesiumionen in die genannten Kohlenstoffmodifikationen, insbesondere Graphit, scheint durch die Anwesenheit relativ großer Anionen erleichtert zu werden.

Als organisches Lösungsmittel kann der nichtwässrige Elektrolyt bevorzugt mindestens ein aprotisches, Lösungsmittel aus der Gruppe der organischen Carbonate, insbesondere Ethylencarbonat, Diethylcarbonat, Dimethylcarbonat, Ethylmethylcarbonat, Propylencarbonat und Mischungen davon enthalten. Ferner können auch Ether, insbesondere Dimethylether und Tetrahydrofuran, eingesetzt werden. Des Weiteren kommen auch Amide, insbesondere Dimethylacetamid und Dimethylformamid, sowie Nitrile, insbesondere Acetonitril und Adiponitril, als organische Lösungsmittel für eine erfindungsgemäße Batterie in Frage.

In jedem Fall enthält der Elektrolyt als organisches Lösungsmittel Dimethylformamid.

Vorzugsweise liegt das Magnesiumleitsalz vollständig gelöst in dem Elektrolyten vor. Es ist allerdings auch denkbar, dass ein Teil des Magnesiumleitsalzes in fester Form, insbesondere in der Art eines Depots, in einer der Elektroden oder in beiden Elektroden vorliegt.

Zur Herstellung einer negativen Elektrode für eine erfindungsgemäße Magnesiumbatterie wird bevorzugt eine pastöse Masse (der sogenannte Elektrodenslurry) enthaltend ein Gemisch aus einem Prozesslösungsmittel (Wasser oder ein organisches Lösungsmittel, in der Regel abhängig vom verwendeten Elektrodenbinder), dem Aktivmaterial sowie in der Regel elektrochemisch inaktiven Materialien wie Elektrodenbinder, Leitfähigkeitsadditiv und gegebenenfalls weiteren Additiven bereitgestellt. Die pastöse Masse kann dann als dünne Schicht auf eine als Stromableiter dienende Metallfolie, beispielsweise Kupferfolie, aufgebracht werden. Als Techniken zum Aufbringen der Masse sind beispielsweise Rakeln; Pinseln oder Tauchbeschichten zu nennen. Ferner kann die Masse auch mittels Siebdruck auf einen metallischen Ableiter aufgebracht werden. Um das Prozesslösungsmittel anschließend zu entfernen kann sich gegebenenfalls ein Trockenschritt anschließen.

Die erhaltene negative Elektrode kann dann mit einer positiven Elektrode der oben beschriebenen Art und einem Elektrolyten, wie er oben beschrieben wurde, zu einer erfindungsgemäßen Magnesiumbatterie kombiniert werden.

Weitere Merkmale der Erfindung ergeben sich auch aus der nun folgenden Beschreibung bevorzugter Ausführungsformen in Verbindung mit den Unteransprüchen. Hierbei können einzelne Merkmale jeweils für sich oder zu mehreren in Kombination miteinander einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispielteil

Auf einer Kupferfolie wurden negative Elektroden der folgenden Zusammensetzung aufgebracht und nach Trocknung mit den folgenden Elektrolyten getränkt:
(1) 7 Gew.-% PVdF-Binder (Kynar 761), 3 Gew.-% Leitruß (Super-P), 90 Gew.-% Graphit (Natural Graphite, Hersteller Qingdao)
   Der verwendete Elektrolyt war Dimethylformamid (DMF) + 0,5M Magnesium-(II)- Bis(trifluoromethanesulfonyl)imide
(2) 10 Gew.-% Carboxymethylcellulose-Binder, 90 Gew.-% Graphit (Synthetic Graphite SFG-44, Hersteller Timcal)
   Der verwendete Elektrolyt war Dimethylformamid (DMF) + 0,5M Magnesium-(II)- Bis(trifluoromethanesulfonyl)imide
(3) 7 Gew.-% PVdF-Binder (Kynar 761), 3 Gew.-% Leitruß (Super-P), 90 Gew.-% Graphit (Natural Graphite, Hersteller Qingdao)
   Der verwendete Elektrolyt war Dimethylformamid (DMF) + 0,5M Mg(CF₃SO₃)₂
(4) 7 Gew.-% PVdF-Binder (Na-Carboxymethylzellulose), 3 Gew.-% Leitruß (Super-P), 90 Gew.-% Graphit (Natural Graphite, Hersteller Qingdao)
   Der verwendete Elektrolyt war Dimethylformamid (DMF) + 0,5M Magnesium-(II)- Bis(trifluoromethanesulfonyl)imide

Die hergestellten Elektroden wurden elektrochemisch charakterisiert.

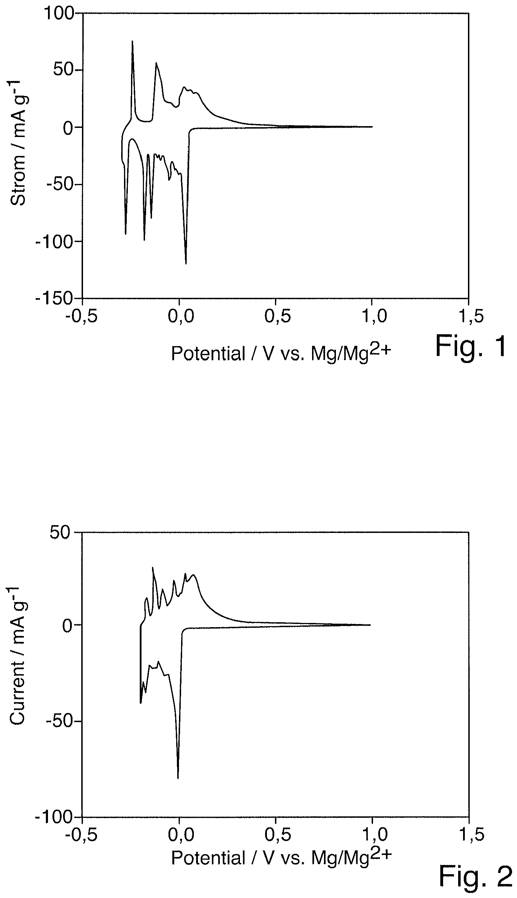

Figur 1 zeigt die Ergebnisse der zyklovoltammetrische Untersuchung einer negativen Elektrode gemäß (1). Die gewählte Vorschubgeschwindigkeit betrug 100 µV/s.
Figur 2 zeigt die Ergebnisse der zyklovoltammetrische Untersuchung einer negativen Elektrode gemäß (2). Die gewählte Vorschubgeschwindigkeit betrug 100 µV/s.

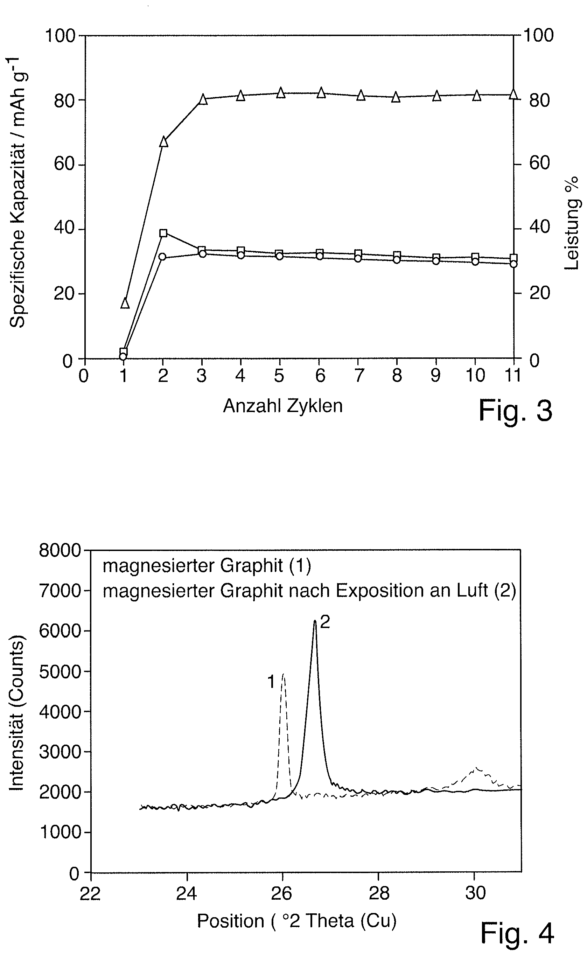

Figur 3 zeigt Lade-/Entladetests einer erfindungsgemäßen negativen Elektrode gemäß (3). Im ersten Zyklus wurde die Abschaltspannung bis 0,0 V gegen eine Magnesiumstandardelektrode (Mg/Mg²⁺) gewählt mit 0,1 C. Danach wurde die Abschaltspannung für die nächsten fünf Zyklen bis -0,2 V gegen Mg/Mg²⁺ erweitert mit 0,1 C. Die letzten fünf Zyklen wurden bei gleichen Spannungskriterien mit 0,05 C gewählt. Es ist eine eindeutig reversible elektrochemische Reaktion ersichtlich, die über mehrere Zyklen nachgewiesen werden kann.
Fig. 4 zeigt eine röntgendiffraktometrische Untersuchung (XRD) einer geladenen (magnesierten) erfindungsgemäßen negativen Elektrode gemäß (4) nach 3 Lade-/Entladezyklen. Es ist eine eindeutige Verschiebung des Graphitpeaks zu einem kleineren Winkel θ erkennbar (Kurve 1). Diese Verschiebung tritt dann auf, wenn eine Spezies in Graphit interkaliert wird. Nach Exposition dieser Elektrode an Luft, kehrt der Graphitpeak zu seinem ursprünglichen Winkel θ zurück (Kurve 2). Dies zeigt eindeutig eine reversible Einlagerung der Magnesium-Ionen, ohne dass dabei der Graphit bzw. dessen Struktur zerstört wird. Eine rein solvatisierte (lösungsmittelbedingte) Interkalation von Magnesiumionen kann ausgeschlossen werden. Per XRD-Analyse konnte festgestellt werden, dass die Graphitschichten bei einer Einlagerung von Magnesium-lonen einen höheren Abstand aufweisen. Die erhaltene Phase entspricht in etwa einer Summenformel von Mg_{0,1}C₁₂.

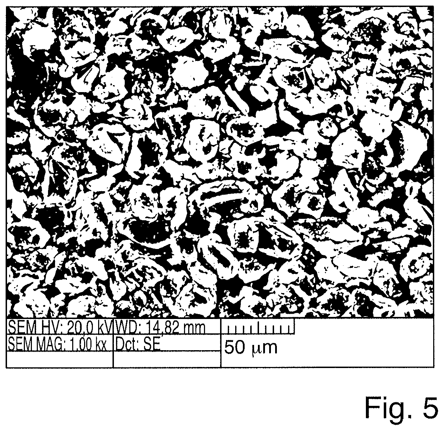

Um eine irreversible Reaktion wie sie bei einer solvatisierten Interkalation von Magnesiumionen auftreten würde (Aufblättern der Graphitschichten) auszuschließen, wurde die Graphitelektroden nach einer Zyklisierung ferner mit dem Elektronenmikroskop untersucht. Aus Abbildung 5 geht eindeutig hervor, dass die Graphitpartikel nicht exfoliert (aufgeblättert) und damit irreversibel durch die Ein- und Auslagerung von Magnesium zerstört sind. Entsprechend ist eine irreversible Elektrolytzersetzungsreaktion bzw. eine solvatisierte Interkalation auszuschließen.

## Patentansprüche

1. Wieder aufladbare Magnesiumbatterie, umfassend
- mindestens eine positive Elektrode, die ein Aktivmaterial enthält, das Magnesiumionen reversibel ein- und auszulagern vermag,
- mindestens eine negative Elektrode, die ein Aktivmaterial enthält, das Magnesiumionen reversibel ein- und auszulagern vermag, und
- einen ein Magnesiumsalz enthaltenden Elektrolyten, über welchen ein Ladungsaustausch zwischen der mindestens einen positiven und der mindestens einen negativen Elektrode stattfinden kann,
wobei das Aktivmaterial der negativen Elektrode mindestens eine Kohlenstoffmodifikation und bevorzugt zusätzlich ein Metall aus der Gruppe mit Silizium, Germanium, Zinn, Zink, Antimon, Bismut, Aluminium und Mangan umfasst, **dadurch gekennzeichnet, dass** das Aktivmaterial als Kohlenstoffmodifikation Graphit umfasst und der Elektrolyt als organisches Lösungsmittel Dimethylformamid umfasst und der Elektrolyt als Magnesiumsalz mindestens ein Leitsalz aus der Gruppe mit den drei Mitgliedern Mg(N(CF₃SO₂)₂)₂, Mg(ClO₄)₂, und Mg(CF₃SO₃)₂ enthält.

2. Magnesiumbatterie nach Anspruch 1, **dadurch gekennzeichnet, dass** die negative Elektrode ein Komposit aus mindestens einem der genannten Metalle oder einer entsprechenden Magnesiumlegierung und der mindestens einen Kohlenstoffmodifikation umfasst.

3. Magnesiumbatterie nach einem der vorhergehenden Ansprüche, **dadurch gekennzeichnet, dass** das Aktivmaterial eine Mischung aus der mindestens einen Kohlenstoffmodifikation und dem mindestens einen mit Magnesium legierbaren Metall ist, und dass das Aktivmaterial diese Komponenten in den folgenden Anteilen enthält:
- 10 bis 90 Gew.-% der mindestens einen Kohlenstoffmodifikation und
- 90 bis 10 Gew.-% des mindestens einen mit Magnesium legierbaren oder legierten Metalls.

4. Magnesiumbatterie nach einem der vorhergehenden Ansprüche, **dadurch gekennzeichnet, dass** die negative Elektrode mindestens eine Komponente aus der Gruppe mit leitfähigkeitsverbesserndem Additiv, Elektrodenbinder, Korrosionsinhibitor und Stromableiter enthält.

5. Magnesiumbatterie nach Anspruch 4, **dadurch gekennzeichnet, dass** die negative Elektrode
- zwischen 10 und 100 Gew.-%, vorzugsweise 20 und 98 Gew.-%, insbesondere 40 und 95 Gew.-%, des Aktivmaterials
- zwischen 0 und 50 Gew.-%, vorzugsweise 1 und 40 Gew.-%, insbesondere 2 und 20 Gew.-%, des Elektrodenbinders
- zwischen 0 und 70 Gew.-%, vorzugsweise 1 und 60 Gew.-%, insbesondere 2 und 50 Gew.-%, des leitfähigkeitsverbessernden Additivs
enthält.

6. Magnesiumbatterie nach einem der vorhergehenden Ansprüche, **dadurch gekennzeichnet, dass** der Elektrolyt eine ionische Flüssigkeit umfasst.

## Claims

1. Rechargeable magnesium battery comprising
- at least one positive electrode containing an active material which is able to incorporate and release magnesium ions reversibly,
- at least one negative electrode containing an active material which is able to incorporate and release magnesium ions reversibly and
- an electrolyte which contains a magnesium salt and via which charge exchange between the at least one positive electrode and the at least one negative electrode can take place,
where the active material of the negative electrode comprises at least one carbon modification and preferably additionally comprises a metal from the group consisting of silicon, germanium, tin, zinc, antimony, bismuth, aluminium and manganese, **characterized in that** the active material comprises graphite as carbon modification and the electrolyte comprises dimethylformamide as organic solvent and the electrolyte contains at least one conductive salt from the group consisting of the three members Mg(N(CF₃SO₂)₂)₂, Mg(ClO₄)₂ and Mg(CF₃SO₃)₂ as magnesium salt.

2. Magnesium battery according to Claim 1, **characterized in that** the negative electrode comprises a composite of at least one of the metals mentioned or a corresponding magnesium alloy and the at least one carbon modification.

3. Magnesium battery according to either of the preceding claims, **characterized in that** the active material is a mixture of the at least one carbon modification and the at least one metal which is alloyable with magnesium and **in that** the active material contains these components in the following proportions:
- from 10 to 90% by weight of the at least one carbon modification and
- from 90 to 10% by weight of the at least one metal which is alloyable or alloyed with magnesium.

4. Magnesium battery according to any of the preceding claims, **characterized in that** the negative electrode contains at least one component from the group consisting of conductivity-improving additive, electrode binder, corrosion inhibitor and power outlet lead.

5. Magnesium battery according to Claim 4, **characterized in that** the negative electrode contains
- from 10 to 100% by weight, preferably from 20 to 98% by weight, in particular from 40 to 95% by weight, of the active material
- from 0 to 50% by weight, preferably from 1 to 40% by weight, in particular from 2 to 20% by weight, of the electrode binder
- from 0 to 70% by weight, preferably from 1 to 60% by weight, in particular from 2 to 50% by weight, of the conductivity-improving additive.

6. Magnesium battery according to any of the preceding claims, **characterized in that** the electrolyte comprises an ionic liquid.

## Revendications

1. Batterie rechargeable au magnésium, comprenant
- au moins une électrode positive, qui contient un matériau actif qui peut accumuler ou évacuer de manière réversible des ions de magnésium,
- au moins une électrode négative, qui contient un matériau actif qui peut accumuler ou évacuer de manière réversible des ions de magnésium et
- un électrolyte contenant un sel de magnésium, via lequel un échange de charges entre ladite au moins une électrode positive et ladite au moins une électrode négative peut avoir lieu,
le matériau actif de l'électrode négative comprenant au moins une modification du carbone et de préférence en outre un métal du groupe comprenant le silicium, le germanium, l'étain, le zinc, l'antimoine, le bismuth, l'aluminium et le manganèse, **caractérisée en ce que** le matériau actif comprend, comme modification du carbone, du graphite et l'électrolyte comprend, comme solvant organique, du diméthylformamide et l'électrolyte contient, comme sel de magnésium, au moins un sel conducteur du groupe formé par les trois membres Mg(N(CF₃SO₂)₂)₂, Mg(ClO₄)₂ et Mg(CF₃SO₃)₂.

2. Batterie au magnésium selon la revendication 1, **caractérisée en ce que** l'électrode négative comprend un composite constitué par au moins un des métaux mentionnés ou un alliage de magnésium correspondant et ladite au moins une modification du carbone.

3. Batterie au magnésium selon l'une quelconque des revendications précédentes, **caractérisée en ce que** le matériau actif est un mélange de ladite au moins une modification du carbone et dudit au moins un métal pouvant former un alliage avec le magnésium et **en ce que** le matériau actif contient ces composants dans les proportions suivantes :
- 10 à 90% en poids de ladite au moins une modification du carbone et
- 90 à 10% en poids dudit au moins un métal pouvant former un alliage ou allié avec le magnésium.

4. Batterie au magnésium selon l'une quelconque des revendications précédentes, **caractérisée en ce que** l'électrode négative contient au moins un composant du groupe constitué par un additif améliorant la conductibilité, un liant d'électrode, un inhibiteur de corrosion et un dérivateur du courant.

5. Batterie au magnésium selon la revendication 4, **caractérisée en ce que** l'électrode négative contient
- entre 10 et 100% en poids, de préférence entre 20 et 98% en poids, en particulier entre 40 et 95% en poids, de matériau actif
- entre 0 et 50% en poids, de préférence entre 1 et 40% entre poids, en particulier entre 2 et 20% en poids, de liant d'électrode
- entre 0 et 70% en poids, de préférence entre 1 et 60% en poids, en particulier entre 2 et 50% en poids, de l'additif améliorant la conductibilité.

6. Batterie au magnésium selon l'une quelconque des revendications précédentes, **caractérisée en ce que** l'électrolyte comprend un liquide ionique.
